# EUROPÄISCHE PATENTSCHRIFT

(11) **EP 0 853 027 B1**
(45) Veröffentlichungstag und Bekanntmachung des Hinweises auf die Patenterteilung: **20.02.2002**
(21) Anmeldenummer: 97123042.0
(22) Anmeldetag: 31.12.1997
(51) Int. Cl.: B60R 21/20, B60R 13/02

(54) **Säulenverkleidung für Säulen von Kraftfahrzeugen**
Pillar cover for pillars of motor vehicles
Revêtement de montant pour montants de véhicules automobiles

(30) Priorität: 10.01.1997 DE 19700584
(43) Veröffentlichungstag der Anmeldung: 15.07.1998
(73) Patentinhaber: IBS Brocke GmbH & Co. KG, 51597 Morsbach (DE)
(72) Erfinder: Beer, Bernhard, 51545 Waldbröl (DE); Chen, Xing Yu, 51597 Morsbach (DE)
(74) Vertreter: Godemeyer, Thomas, Dr.

(56) Entgegenhaltungen:
- EP-A- 0 841 221
- DE-A- 2 525 492
- DE-A- 3 942 265
- DE-A- 4 015 375
- FR-A- 1 408 952
- PATENT ABSTRACTS OF JAPAN vol. 96, no. 7, 31.Juli 1996 & JP 08 072642 A (MITSUBISHI MOTORS CORP), 19.März 1996,
- PATENT ABSTRACTS OF JAPAN vol. 16, no. 99 (M-1220), 11.März 1992 & JP 03 276844 A (MAZDA MOTOR CORP), 9.Dezember 1991,

## Beschreibung

Die Erfindung betrifft eine Säulenverkleidung von Kraftfahrzeugen bestehend aus einer Dekorschicht 1 und einem darauf aufgebrachten Kunststoffformteil 2.

Zum Schutz von Insassen von Kraftfahrzeugen ist es inzwischen üblich geworden, Aufprallsysteme, insbesondere Airbags in Kraftfahrzeuge einzubauen. Diese Airbags werden im allgemeinen im Frontbereich des Kraftfahrzeugs, insbesondere im Lenkrad oder im vorderen Armaturenbrett integriert.

Mittlerweile werden jedoch auch zusätzliche Seitenaufprallsysteme sogenannte Seitenairbags in Kraftfahrzeugen eingesetzt. Diese sind im allgemeinen in den Türverkleidungen integriert und werden bei einem entsprechenden Seitenaufprall ausgelöst.

In einer weiteren Ausführungsform dieser Seitenaufprallsysteme sollen die Airbags in den Säulenverkleidungen der Kraftfahrzeuge integriert werden.

Die vorliegende Erfindung betrifft eine Säulenverkleidung für ein derartiges integriertes Seitenaufprallsystem.

Säulenverkleidungen bestehen aus einer optisch ansprechenden Dekorschicht sowie einem durch Spritzgußtechnik hinterspritzten Kunststoffformteil. Die Dekorschicht kann im allgemeinen aus Textilien aber auch aus textilähnlichen Folien bestehen und soll ein optisch ansprechendes Aussehen haben.

Aus dem Stand der Technik sind Säulenverkleidungen bekannt, bei denen es sich um hinterspritzte Kunststoffteile handelt, wobei das Kunststoffformteil mit Verrippungen versehen ist, um die Stabilität zu erhöhen. Werden solche Säulenverkleidungen für integrierte Airbag-Systeme benutzt, besteht das Problem, daß der Airbag bei Auslösung aus der Säulenverkleidung nicht entweichen kann, da Kunststoffteile mit Verrippungen sich nur in sehr begrenztem Umfang verbiegen können. Weiterhin besteht die Gefahr, daß beim Auslösen des Airbags derartige Verkleidungen auseinanderbrechen und zersplittern und somit bei den Insassen zu Verletzungen führen.

Aus der EP-A-841 221, die einen Stand der Technik nach Artikel 54(3) EPÜ darstellt und nur bezüglich der Neuheit zu betrachten ist, ist eine Säulenverkleidung mit einem Airbag-System bekannt, bei der die Dekorschicht auf das Kunststoffformteil aufkaschiert ist. Dadurch weist diese Säulenverkleidung gegenüber hinterspritzten Kunststoffteilen andere Eigenschaften auf.

Die technische Aufgabe der Erfindung ist es daher, eine neue Säulenverkleidung für Airbag-Systeme zur Verfügung zu stellen, bei der gewährleistet ist, daß es beim Auslösen des Airbags nicht zu einem Zersplittern oder zu einer Verzögerung der Auslösung kommt.

Dieses Problem wird durch die Merkmale des Anspruchs 1 gelöst.

Mit dieser Maßnahme wird erreicht, daß beim Auslösen des Airbags eine Deformation der Säulenverkleidung derart auftritt, daß ein Teil der Säulenverkleidung in voller Länge zur Seite klappt und der Airbag beim Auslösen freigegeben wird.

Dabei sorgt der Zweikomponentenaufbau aus Kunststoffformteil und Dekorschicht dafür, daß das deformierte Kunststoffteil nicht abreißt oder absplittert, weil es durch die flexible Dekorschicht gehalten wird.

Die erfindungsgemäße Säulenverkleidung hat weiterhin den Vorteil, daß sie in normalem Zustand fest eingebaut werden kann und durch die entlang einer Linie verminderte Wandstärke keine Stabilität verliert.

In einer bevorzugten Ausführungsform ist die Säulenverkleidung so gestaltet, daß entlang einer Linie in Längsrichtung mindestens eine Rille 3 auf der Rückseite des Kunststoffformteils 2 angeordnet ist. Die Dekorschicht 1 ist eine Textilschicht oder besteht aus einer textilähnlichen Folie.

Die Säulenverkleidung ist insbesondere vorgesehen für die A- und B-Säulen von Kraftfahrzeugen, wobei Seitenairbags 4 hinter den Säulenverkleidungen 6 integriert sind.

Die nachfolgenden Figuren sollen die Erfindung näher erläutern.

Figur 1 zeigt eine schematische Schnittansicht der erfindungsgemäßen Säulenverkleidung.

Figur 2 zeigt dieselbe Säulenverkleidung nach dem Umbiegen.

Figur 3 zeigt einen in die Säulenverkleidung integrierten Airbag vor dem Auslösen.

Figur 4 zeigt einen in die Säulenverkleidung integrierten Airbag nach dem Auslöseprozeß.

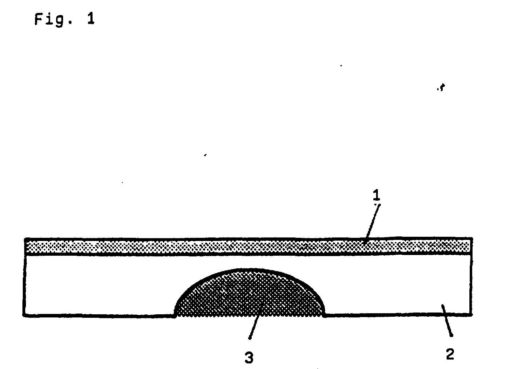

Figur 1 stellt eine Querschnittsansicht der erfindungsgemäßen Säulenverkleidung dar. Die Ziffer 1 bezeichnet die Dekorschicht, die in besonders bevorzugter Ausführungsform aus Textilien oder textilähnlichen Kunststoffmaterialien bestehen kann. Ziffer 2 stellt das Kunststoffformteil dar, das im allgemeinen ein spritzgegossenes Formteil ist, welches mittels der Hinterspritztechnik auf die Dekorschicht aufgebracht wird. Die Ziffer 3 bezeichnet die in Längsrichtung der Säulenverkleidung eingezogene Rille 3 auf der Rückseite des Kunststoffformteiles.

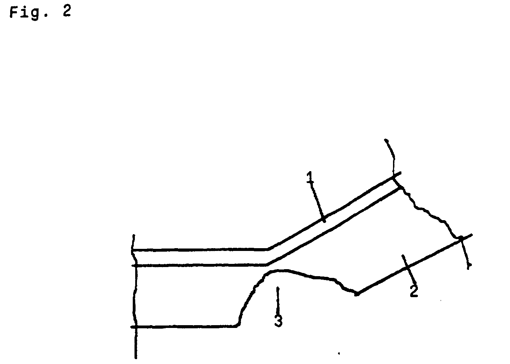

Figur 2 zeigt die erfindungsgemäße Säulenverkleidung in umgebogenem Zustand, etwa nach dem Auslösen des Seitenairbags. Ziffer 1 bezeichnet die Dekorschicht, Ziffer 2 das Kunststoffformteil und die Ziffer 3 die in Längsrichtung angeordnete Rille im Kunststoffformteil.

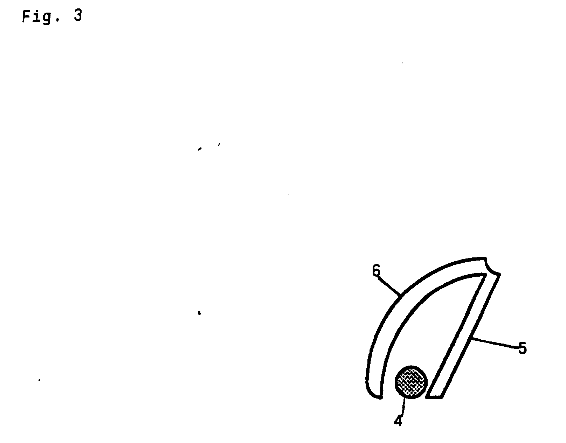

Figur 3 zeigt einen Airbag in einer Säulenverkleidung integriert. Ziffer 4 bezeichnet den Airbag, Ziffer 5 die Karosseriesäule und Ziffer 6 die erfindungsgemäße Seitenverkleidung.

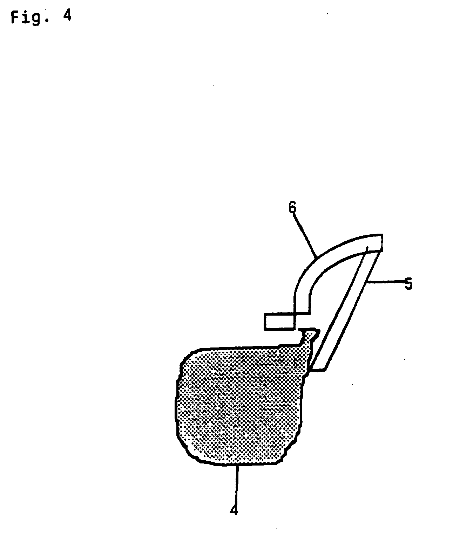

Figur 4 zeigt dieselbe Anordnung wie in Figur 3 nach Auslösen des Airbags 4. Mit der Ziffer 5 ist die Karosseriesäule bezeichnet. Die Ziffer 6 zeigt die erfindungsgemäße Säulenverkleidung in umgebogenem Zustand. Es ist zu erkennen, daß die Säulenverkleidung beim Auslösen des Airbags entlang der Rille deformiert und umgebogen ist, wobei die Dekorschicht dafür sorgt, daß der umgebogene Teile nicht abreißt oder zersplittert.

Mit der erfindungsgemäßen Säulenverkleidung besteht erstmals die vorteilhafte Möglichkeit, Seitenairbags in die Säulenverkleidung von Kraftfahrzeugen zu integrieren. Durch den Aufbau der erfindungsgemäßen Säulenverkleidung wird gewährleistet, daß es beim Auslösen des Airbags zu keiner Zersplitterung oder zu einem Abreißen der Säulenverkleidung kommt. Weiterhin wird sichergestellt, daß sich der ausgelöste Airbag ohne eine Behinderung der Säulenverkleidung frei ausdehnen kann.

Mit diesen Maßnahmen wird einerseits verhindert, daß die Insassen durch abgerissene oder zersplitterte Kunststoffteile verletzt werden und weiterhin die funktionsgerechte Auslösung und Funktion des Airbags gewährleistet.

## Patentansprüche

1. Säulenverkleidung mit Airbag-System für Säulen von Kraftfahrzeugen bestehend aus einer Dekorschicht (1) aus Textil oder einer textilähnlichen Folie und einem darauf aufgebrachten hinterspritzten Kunststoffformteil (2), wobei entlang einer Linie in Längsrichtung der Säulenverkleidung die Wandstärke des Kunststoffformteils (2) auf der Rückseite verringert ist.

2. Säulenverkleidung nach Anspruch 1, **dadurch gekennzeichnet, daß** entlang einer Linie in Längsrichtung mindestens eine Rille (3) auf der Rückseite des Kunststoffformteils (2) angeordnet ist.

3. Säulenverkleidung nach den Ansprüchen 1 oder 2 **dadurch gekennzeichnet, daß** sie für A- und B-Säulen von Kraftfahrzeugen eingesetzt wird, wobei Seitenairbags (4) hinter den Säulenverkleidungen (6) integriert sind.

## Claims

1. A pillar garnish with air bag system for pillars of motor vehicles, consisting of a decorative layer (1) made of a textile material or a textile-like sheet and a back injection-molded plastic molded article (2) applied thereon, wherein the wall thickness of the plastic molded article (2) at the back thereof is reduced along a line extending in longitudinal direction of the pillar garnish.

2. The pillar garnish according to claim 1, **characterized in that** at least one groove (3) is arranged on the back of the plastic molded article (2) along a line extending in longitudinal direction.

3. The pillar garnish according to claim 1 or 2, **characterized in that** said garnish is used for A and B pillars of motor vehicles, the lateral air bags (4) being integrated behind the pillar garnishes (6).

## Revendications

1. Habillage de montants avec un système à airbag pour montants de véhicules automobiles, se composant d'une couche décorative (1) en textile ou en une feuille ressemblant au textile, et d'une pièce moulée en matière plastique (2) injectée derrière appliquée sur cela, l'épaisseur de paroi de ladite pièce moulée en matière plastique (2) étant réduite sur le derrière le long d'une ligne dans la direction longitudinale de l'habillage de montants.

2. Habillage de montants selon la revendication 1, **caractérisé par le fait que**, le long d'une ligne dans la direction longitudinale, une rainure (3) du moins est disposée sur le derrière de la pièce moulée en matière plastique (2)

3. Habillage de montants selon les revendications 1 ou 2, **caractérisé par le fait qu'**il est utilisé pour des colonnes A et B de véhicules automobiles, des airbags latéraux (4) étant intégrés derrière les habillages de montants (6).
